# EUROPEAN PATENT APPLICATION

(11) **EP 4 397 479 A1**
(43) Date of publication of application: **10.07.2024**
(21) Application number: 22864228.6
(22) Date of filing: 12.08.2022
(51) Int. Cl.: B32B 7/027, A41D 27/00, A41D 31/00, A41D 31/04, B32B 5/00, B32B 33/00, H05B 3/14, H05B 3/20, H05B 3/36

(54) **SMART TEXTILE AND SYSTEM**

(30) Priority: 31.08.2021 JP 2021140775
(71) Applicant: ZOZO, Inc., Chiba-shi, Chiba, 263-0023 (JP)
(72) Inventor: NAKAMARU, Satoshi, Chiba-shi, Chiba 263-0023 (JP); TAJIMA, Kotaro, Chiba-shi, Chiba 263-0023 (JP)
(74) Representative: Hoffmann Eitle
(86) International application number: PCT/JP2022/030782
(87) International publication number: WO 2023/032643

(57) **Abstract**

To provide a high-safety smart textile that changes its design appropriately in response to a temperature, while ensuring softness and delicateness in the texture. A smart textile (100) is characterized by including a foil having a layered structure in which a layer of thermochromic ink changing color at a predetermined temperature as a threshold and a layer of a heating electrode are layered.

## Description

### Field

The present invention relates to a smart textile and a system.

### Background

In many industries such as interior design (e.g., wallpapers), fashion (e.g., clothing), and automotive, there are demands for incorporating electronic circuits into a fabric or articles that can be manufactured from a fabric. A method using a smart textile to meet such demands has been known.

Conventionally, techniques for bonding line surface films and weaving a smart textile therewith have been known (see Patent Literatures 1 and 2 below, for example). Furthermore, a technique for weaving a smart textile with a design that changes in response to an electric field, for example, has also been known (see Patent Literature 3 below).

### Citation List

### Patent Literature

Patent Literature 1: Japanese Patent Application Laid-open No. 2017-208275
Patent Literature 2: Japanese Patent Application Laid-open No. 2020-140962
Patent Literature 3: Japanese Patent No. 6826352

### Summary

### Technical Problem

However, such conventional technologies are not capable of providing a high-safety smart textile with a design that changes appropriately in response to a temperature, while ensuring softness and delicateness in the texture.

The present application is made in consideration of the above, and an object of the present application is to provide a high-safety smart textile with a design that changes appropriately in response to a temperature, while ensuring softness and delicateness in the texture.

### Solution to Problem

A smart textile includes a foil having a layered structure in which a layer of thermochromic ink changing color at a predetermined temperature as a threshold and a layer of a heating electrode are layered.

### Advantageous Effects of Invention

According to one aspect of the embodiment, it is possible to provide a high-safety smart textile with a design that changes appropriately in response to a temperature, while ensuring softness and delicateness in the texture, advantageously.

### Brief Description of Drawings

FIG. 1 is a schematic illustrating one example of information processing according to an embodiment.
FIG. 2 is a schematic diagram illustrating a cross section of a foil according to the embodiment.
FIG. 3A is a schematic illustrating an exemplary structure of the foil according to the embodiment.
FIG. 3B is a schematic illustrating an exemplary structure of the foil according to the embodiment.
FIG. 3C is a schematic illustrating an exemplary structure of the foil according to the embodiment.
FIG. 3D is a schematic illustrating an exemplary structure of the foil according to the embodiment.
FIG. 3E is a schematic illustrating an exemplary structure of the foil according to the embodiment.
FIG. 3F is a schematic illustrating an exemplary structure of the foil according to the embodiment.
FIG. 4A is a schematic illustrating an exemplary structure of a heating yarn according to the embodiment.
FIG. 4B is a schematic illustrating an exemplary structure of the heating yarn according to the embodiment.
FIG. 4C is a schematic illustrating an exemplary structure of the heating yarn according to the embodiment.
FIG. 5 is a schematic illustrating an exemplary configuration of an information processing system according to the embodiment.

### Description of Embodiments

A mode for carrying out a smart textile and a system according to the present application (hereinafter referred to as "embodiment") will now be explained in detail with reference to the drawings. However, this embodiment is not intended to limit the scope of the smart textile and the system according to the present application in any way. In the embodiments described below, the same reference numerals will be assigned to the same parts, and redundant explanations thereof will be omitted.

### (Embodiment)

### [1. One Example of Information Processing]

In the embodiment, an example in which a textile 100 is a smart textile will be explained. Specifically, it is assumed herein that the textile 100 is a smart textile woven with a foil or a yarn that includes layers of thermochromic ink that changes its color at a predetermined temperature as a threshold, and a heating electrode capable of generating heat. It is also assumed herein that the thermochromic ink changes its color in response to a temperature resultant of the heat generated by the heating electrode. For example, the thermochromic ink may change its color in a plurality of stages in response to temperatures. For example, the thermochromic ink may change its color based on a combination of a base color that turns colorless by being heated, and another base color that does not turn colorless by being heated. The thermochromic foil according to the embodiment may be configured as layers of a positive temperature coefficient (PTC) ink, which suppresses overheating, and a layer of an ink containing a leuco dye that is a thermochromic material.

In the following embodiment, the textile 100 includes a foil having a layered structure in which a layer of thermochromic ink and a layer of a heating electrode are layered. However, the textile 100 may include a yarn including concentric layers of thermochromic ink and a heating electrode. Furthermore, in the embodiment described below, an example in which the textile 100 is controlled by a controller 10, but the way in which the textile 100 is controlled is not limited to a particular technique.

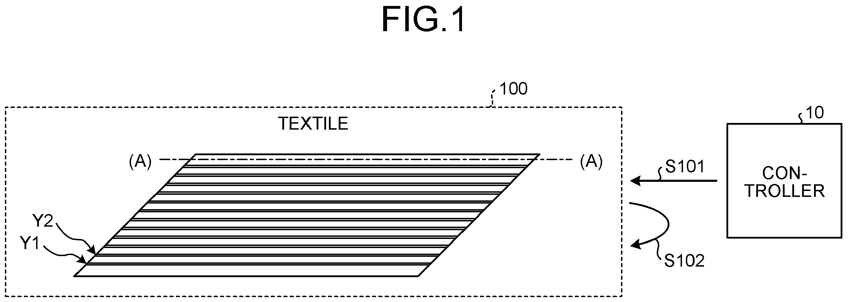

FIG. 1 is a schematic illustrating one example of information processing performed by an information processing system 1 according to the embodiment. In FIG. 1, it is assumed that the textile 100 is controlled by the controller 10. For example, heating of the heating electrode is controlled by the controller 10. The controller 10 transmits control information to the textile 100 in accordance with a user operation, for example (Step S101). The textile 100 performs processing for heating the heating electrode, in accordance with the control information received from the controller 10 (Step S102). For example, the textile 100 performs processing for heating the heating electrode by applying a voltage. The textile 100 may control the heating of the heating electrode incrementally, by modulating the control signal. Although not illustrated, the textile 100 may transmit the result of the control that is based on the control information received from the controller 10, to the controller 10.

In FIG. 1, the textile 100 has a structure in which yarns Y1, Y2, ... are laid in parallel. The yarns Y1, Y2, ... are conductive yarns, and each of the yarns Y1, Y2, ... is connected to a ground and a predetermined voltage source. Although FIG. 1 illustrates an example in which the textile 100 has a structure in which yarns Y1, Y2, ... are laid in parallel, the textile 100 may include warp yarns that are laid in parallel, in a direction perpendicular to the yarns Y1, Y2, ..., as the weft yarns.

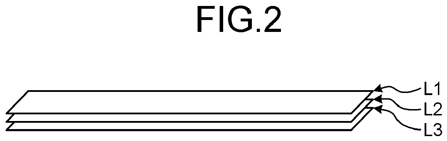

A cross section of a foil according to the embodiment will now be explained. FIG. 2 is a schematic diagram illustrating a cross section of the foil according to the embodiment. FIG. 2 corresponds to the cross section across the line (A)-(A) included in FIG. 1, for example.

A layer L1 is a layer of the yarns Y1, Y2, ... that have coating of thermochromic ink, and is a color-changing layer (thermosensitive layer) that changes its color on the basis of the thermochromic ink. A layer L2 is a heater layer that generates heat on the basis of the heating electrode. A layer L3 is a film layer such as that of a polyethylene terephthalate (PET) film. In other words, the textile 100 includes a foil having a layered structure in which a color-changing layer based on the thermochromic ink, a heater layer based on the heating electrode, and a film layer are layered.

For the convenience of explanation, the layers L1 to L3 are illustrated as being bonded to one another as separate layers, together forming a foil, in FIG. 2, but the foil according to the embodiment may be a foil in which the layers L1 to L3 are integrated. The textile 100 may include such a foil in which the color-changing layer, the heater layer, and the film layer are integrated. In other words, the foil according to the embodiment may be either a bonded foil or an integrated foil, as long as the foil has a layered structure in which the layers L1 to L3 are layered. The textile 100 may have a plurality of the foils laid in parallel.

Different variations of the layer structure of the color-changing layer, the heater layer, and the film layer will now be explained. In the explanation below, it is assumed that, for the convenience of explanation, the film layer is integrated with the heater layer.

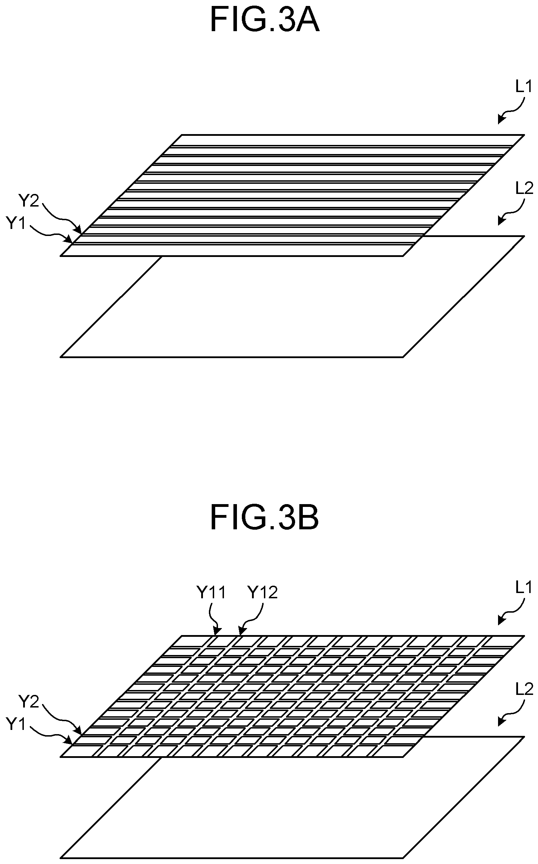

FIG. 3A illustrates an example in which only the weft yarns (yarns Y1, Y2, ...) of the color-changing layer (the layer L1) have the coating of thermochromic ink, and the heating electrode of the heater layer (the layer L2) is a sheet-like electrode. In this example, the color of the weft yarns changes in response to a temperature.

FIG. 3B illustrates an example in which the weft yarns (yarns Y1, Y2, ...) and the warp yarns (yarn Y11, Y12, ...) of the color-changing layer (the layer L1) have the coating of thermochromic ink, and the heating electrode of the heater layer (the layer L2) is a sheet-like electrode. In this example, the colors of the weft yarns and the warp yarns change in response to a temperature.

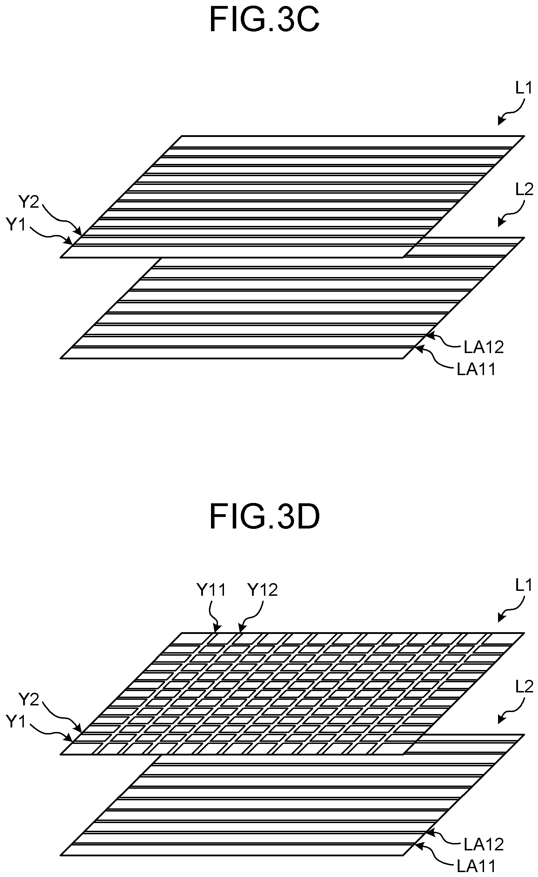

FIG. 3C illustrates an example in which only the weft yarns (yarns Y1, Y2, ...) of the color-changing layer (the layer L1) have the coating of thermochromic ink, and the heating electrodes of the heater layer (the layer L2) are linear electrodes (lines LA1, LA2, ...). It is assumed that the lines LA1, LA2, ... are positioned correspondingly to the yarns Y1, Y2, ...., respectively. In this example, the color of the weft yarns changes along the lines LA1, LA2, ..., in response to a temperature.

FIG. 3D illustrates an example in which the weft yarns (yarns Y1, Y2, ...) and the warp yarns (yarn Y11, Y12, ...) of the color-changing layer (the layer L1) have the coating of thermochromic ink, and the heating electrodes of the heater layer (the layer L2) are linear electrodes (lines LA1, LA2, ...). It is assumed that the lines LA1, LA2, ... are positioned correspondingly to the yarns Y1, Y2, ...., respectively. In this example, the color of the weft yarns changes along the lines LA1, LA2, ..., respectively, in response to a temperature.

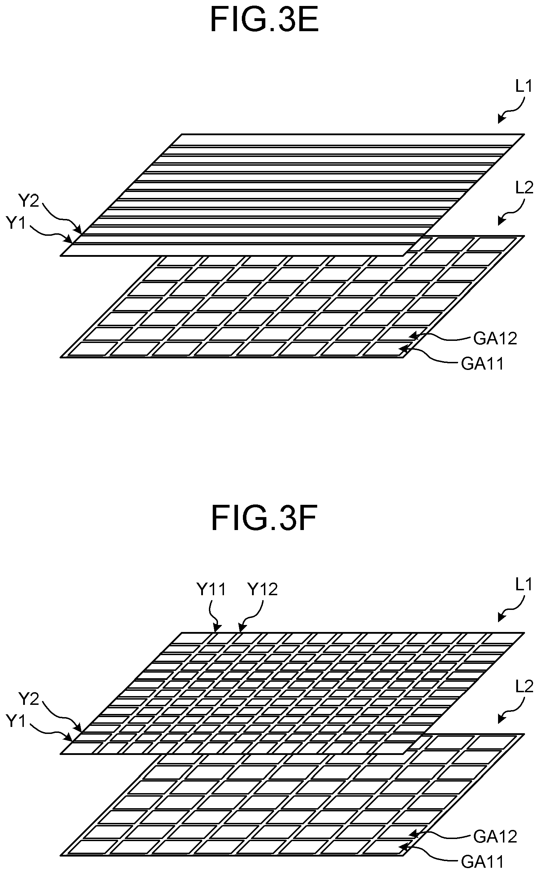

FIG. 3E illustrates an example in which only the weft yarns (yarns Y1, Y2, ...) of the color-changing layer (the layer L1) have the coating of thermochromic ink, and the heating electrodes of the heater layer (the layer L2) are grid electrodes (grids GA1, GA2, ...). In this example, the color of the weft yarns changes along the grids GA1, GA2, ..., in response to a temperature.

FIG. 3F illustrates an example in which the weft yarns (yarns Y1, Y2, ...) and the warp yarns (yarn Y11, Y12, ...) of the color-changing layer (the layer L1) have the coating of thermochromic ink, and the heating electrodes of the heater layer (the layer L2) are grid electrodes (grids GA1, GA2, ...). In this example, the colors of the weft yarns and the warp yarns change along the grids GA1, GA2, ..., in response to their temperatures.

In the textile 100, the yarns with the coating of thermochromic ink are laid in parallel, on the heater layer. Therefore, with the textile 100, because a thin heater layer can be formed with thermochromic ink, softness can be ensured.

Furthermore, with the textile 100, by laying the yarns and the heater layer into multiple layers, the heater layer can be integrated with fibers. Therefore, it is possible to ensure the delicateness of the texture. For example, when the heater layer has a size greater than the size of the yarns, the heater layer may be offset with respect to the yarns. Therefore, the color may be caused to change in units of an area, rather than in units of a yarn. By integrating the heater layer into the yarn itself, delicate delineation becomes possible. Therefore, the delicateness of the texture can be ensured in the textile 100.

Furthermore, by laying yarns having coating of thermochromic ink in parallel, a textile 100 with a parallel electrode structure can be achieved. In this manner, safety can be ensured. In a direct electrode structure, for example, when a part of the electrode brakes, current flow may be obstructed. By contrast, the use of a parallel electrode structure can reduce the risk of concentration of heat, even when a part of the electrode brakes. Therefore, safety of the textile 100 can be ensured.

In the embodiment described above, the textile 100 may be a textile having two points along respective ends according to the embodiment (two ends of the foil according to the embodiment) are short-circuited via a conductive material disposed perpendicular to a direction connecting the two points on the ends.

In the embodiment described above, the textile 100 may include a control circuit integrated with the color-changing layer, the heater layer, and the film layer, and the control circuit may be enabled to control the change in the color of the color-changing layer selectively, in the longitudinal direction of the foil according to the embodiment.

In the embodiment described above, the textile 100 may include a foil having a transparent protection layer (e.g., a PET film) on the top surface of the thermochromic ink that is thinly implemented on the heater layer. In such a configuration, because it can be expected for the film layer, the heater layer, and the color-changing layer of the foil to have thicknesses of 12 um to 24 um, 50 um to 100 µm, and 50 µm, respectively, and for the protection layer to have a thickness of 12 um to 24 µm, for example, it can be expected that the foil has a thinness equal to or less than 0.5 mm.

An example in which the textile 100 includes a foil having a layered structure in which a layer of thermochromic ink and a layer of a heating electrode are layered has been explained so far. Another example in which the textile 100 includes a yarn including concentric layers of the thermochromic ink and the heating electrode will now be explained. In the explanation hereunder, it is assumed that the heater layer is integrated with the yarn itself. The yarn with the integrated heater layer will be appropriately referred to as "heating yarn". In other words, the heating yarn is a yarn having a heating electrode. The textile 100 may be a textile in which such heating yarns are laid in parallel.

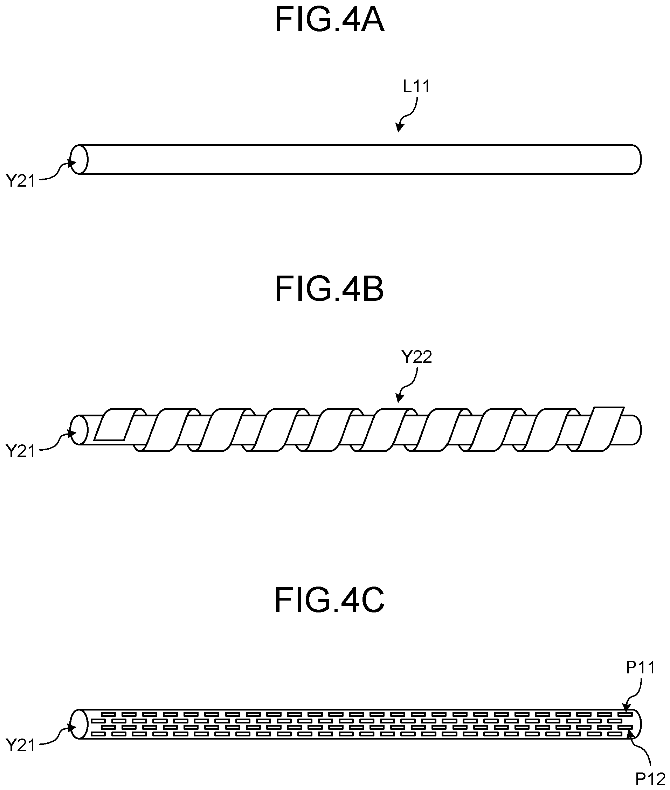

FIG. 4A illustrates an example of the heating yarn (yarn Y21) covered with a color-changing layer (layer L11). For example, the heating yarn (yarn Y21) is covered with the color-changing layer (layer L11) by dip-coating. With the heating yarn (yarn Y21) covered with the color-changing layer (layer L11), the textile 100 includes a heating yarn including concentric layers of the thermochromic ink and the heating electrode.

FIG. 4B illustrates an example in which a yarn Y22 with the coating of thermochromic ink (hereinafter appropriately referred to as "color-changing yarn") is wound around a heating yarn (yarn Y21). This example includes a configuration in which the heating yarn (yarn Y21) is twisted with the color-changing yarn (yarn Y22). As an example, FIG. 4B illustrates a case in which the color-changing yarn (yarn Y22) is wound around the heating yarn (yarn Y21) in a spiral shape, so that the thermochromic ink is exposed on the outer surface. Because the color-changing yarn (yarn Y22) is wound around the heating yarn (yarn Y21), the textile 100 includes a heating yarn with concentric layers of the thermochromic ink and the heating electrode.

FIG. 4C illustrates an example of a heating yarn (yarn Y21) resultant of spinning with thermochromic inks (dyes P11, P12, ...) mixed thereto. With the heating yarn (yarn Y21) spun with thermochromic inks (dyes P11, P12, ...) mixed thereto, the textile 100 includes a heating yarn with concentric layers of the thermochromic ink and the heating electrode.

In the embodiment described above, the textile 100 may include a control circuit integrated with the color-changing layer, the heater layer, and the film layer, and the control circuit may be enabled to control to change the color of the color-changing layer selectively, in the direction of the heating yarn according to the embodiment.

In the embodiment described above, the heating material of the heater layer may be a PTC ink, a carbon material, or an enameled wire, for example.

In the embodiment described above, a material of the heater layer may be a Peltier element, for example.

In the embodiment described above, the change in the heater layer temperature may be controlled by feedback control, for example.

In the embodiment described above, the textile 100 may be used in any object. For example, the textile 100 may be used interior products such as a lamp shade, wallpaper, or furniture, and fashion products such as bags and clothing. The textile 100 may be used in light-adjusting curtains or small goods with a changeable design.

Explained in the embodiment above is an example in which the thermochromic ink according to the embodiment may change its color based on a combination of a base color that turns colorless by being heated, and another base color that does not turn colorless by being heated. The thermochromic ink according to the embodiment may be a combination of three or more base colors based on their hues. The thermochromic ink according to the embodiment may be a combination of a plurality of base colors that change their colors at different temperatures, or may be a combination of a plurality of base colors that change their colors at the same temperature.

Explained in the above embodiment is an example in which the thermochromic ink according to the embodiment changes its color by being heated. The thermochromic ink according to the embodiment may be an ink that changes its color by being cooled. For example, the thermochromic ink according to the embodiment may be a material that changes its color by being cooled with a pipe that is disposed adjacent to the heating electrode and through which cold water flows.

In the embodiment described above, the change of color of the thermochromic ink according to the embodiment may be controlled using one heating line or a plurality of heating lines that are adjacent to one another. In the latter configuration, the color may be controlled between the plurality of adjacent heating lines, for example.

In the embodiment described above, the thermochromic ink according to the embodiment changes its color within a temperature range of 6 degrees Celsius to 7 degrees Celsius, for example. Therefore, one possible use of the textile 100 may include a layer of thermochromic ink that changes at 40 degrees Celsius, and a layer of a heating electrode having a temperature of 60 degrees Celsius to 70 degrees Celsius.

Explained in the above embodiment is an example in which the temperature change according to the embodiment is controlled by the heat generated by the heating electrode, but the embodiment is not limited thereto. For example, temperature change according to the embodiment may be controlled by a temperature change resultant of external factor (e.g., outdoor temperature, temperature settings of an air conditioner). This example is applicable to when an object with the textile 100 incorporated therein is taken outdoors from the indoor, or taken indoors from the outdoor. In such a case, the thermochromic ink according to the embodiment changes its color by being subjected to a temperature change caused by an external factor. Therefore, the textile 100 may have or not have a power source for applying a voltage.

### [2. Configuration of Information Processing System]

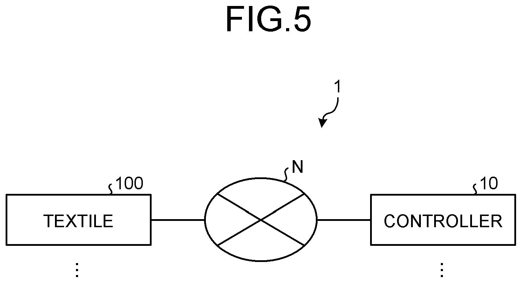

The information processing system 1 illustrated in FIG. 5 will now be explained. As illustrated in FIG. 5, the information processing system 1 includes the controller 10 and the textile 100. The controller 10 is communicably connected to the textile 100, over the wire or wirelessly, via a predetermined communication network (network N). FIG. 5 is a schematic illustrating an exemplary configuration of the information processing system 1 according to the embodiment. The information processing system 1 illustrated in FIG. 5 may include a plurality of the controllers 10 or a plurality of the textiles 100.

The controller 10 is an information processing device used by a user. The controller 10 may be any device, as long as the device is capable of implementing the processing according to the embodiment. The controller 10 may be, for example, a smartphone, a tablet terminal, a laptop PC, a desktop PC, a mobile phone, a PDA, or a microcontroller.

The textile 100 is a smart textile. The textile 100 performs processing on the basis of information received from the controller 10, for example, over the network N.

In the example illustrated in FIG. 5, the controller 10 is a device separate from the textile 100, but it is also possible for the controller 10 to be integrated with the textile 100.

Ways in which the foil (or heating yarn) or a conductive yarn portion of the textile 100 is connected to the controller 10 will now be explained. For example, the conductive yarn portion and the controller 10 are connected by winding the conductive yarn around a conductive substrate, by crimping with mechanical member, or by soldering or bonding with conductive grease. The foil (or heating yarn) according to the embodiment and the controller 10 are connected by mechanically crimping, by soldering or bonding with conductive grease, by nipping between magnets or the like, or by pressure-bonding using anisotropic conductive adhesive film (ACF), for example. These connection alternatives are merely exemplary, and are not limited to any particular methods.

### [3. Usage]

Actual usage will now be explained. An object with a design that changes in response to a temperature can be provided by weaving a textile 100 using the foil (or the heating yarn) according to the embodiment as a material of the textile. To explain a specific example, by incorporating the textile 100 into a lamp shade or wallpaper, for example, a change in the design can be controlled as appropriate, by controlling the voltage applied to the heating electrode in the foil according to the embodiment. With this, control for causing a design to emerge from the rear side of the wallpaper by applying a voltage becomes possible. Specifically, control for causing a design of a flower pattern to emerge, by applying a voltage, from a piece of cloth with a solid color when there is no application of the voltage, is made possible.

Furthermore, control for causing only a part of the design of the textile 100 to change through the control of the voltage application may be possible. For example, control for causing a design to partially change is made possible, by adjusting the connection between the voltage to be applied and the ground for each pixel, so that the voltage application can be controlled in units of one pixel.

### [4. Effects]

As described above, the textile 100 according to the embodiment characterized by including a foil having a layered structure in which a layer of thermochromic ink changing color at a predetermined temperature as a threshold and a layer of a heating electrode are layered.

With this, it is possible to provide a smart textile that changes its design appropriately in response to a temperature.

Furthermore, the textile 100 according to the embodiment is characterized in that the foil includes a color-changing layer that changes color based on the thermochromic ink, and a heater layer that generates heat based on the heating electrode, with the color-changing layer and the heater layer being integrated with each other, and in that a plurality of the foils are laid in parallel.

With this, because the foil can be integrated with fibers, it is possible to provide a smart textile having softness and delicateness in the texture.

Furthermore, the textile 100 according to the embodiment is characterized in that two points on respective ends of the foil are short-circuited via a conductive material disposed perpendicular to a direction connecting the two points of the respective ends.

With this, because it is possible to suppress concentration of heat, a high-safety smart textile can be provided.

Furthermore, the textile 100 according to the embodiment is characterized in that the color-changing layer and the heater layer are integrated with a control circuit, and in that a change in the color of the color-changing layer is controlled selectively along a longitudinal direction of the foil.

With this, it is possible to provide a smart textile enabled to change its design selectively.

Furthermore, the textile 100 according to the embodiment is characterized by including a yarn including concentric layers of thermochromic ink and a heating electrode, the thermochromic ink changing color at a predetermined temperature as a threshold.

With this, it is possible to provide a smart textile that changes its design appropriately in response to a temperature.

Furthermore, the textile 100 according to the embodiment is characterized in that the foil includes a color-changing layer that changes color based on the thermochromic ink, and a heater layer that generates heat based on the heating electrode, with the color-changing layer and the heater layer being integrated with each other, and in that a plurality of the yarns are laid in parallel.

With this, because the foil can be integrated with fibers, it is possible to provide a smart textile having softness and delicateness in the texture.

Furthermore, the textile 100 according to the embodiment is characterized in that the color-changing layer and the heater layer are integrated with a control circuit, and in that a change in the color of the color-changing layer is controlled selectively along a direction of the yarn.

With this, it is possible to provide a smart textile enabled to change its design selectively.

The heating material of the heater layer according to the embodiment is characterized by being a PTC ink, a carbon material, or an enameled wire.

With this, it is possible to provide a smart textile that changes its design appropriately in response to a temperature.

The material of the heater layer according to the embodiment is characterized by being a Peltier element.

With this, it is possible to provide a smart textile having softness and delicateness in the texture.

Furthermore, the thermochromic ink according to the embodiment is characterized in changing the color in a plurality of stages in response to a temperature.

With this, it is possible to provide a smart textile that changes its design appropriately in a plurality of stages, in response to a temperature.

The thermochromic ink according to the embodiment is also characterized in changing the color based on a combination of a base color that turns colorless by being heated, and another base color that does not turn colorless by being heated.

With this, it is possible to provide a smart textile that changes its design appropriately in response to a temperature.

Furthermore, the textile 100 according to the embodiment is characterized in that a change in the temperature is controlled by feedback control.

With this, it is possible to provide a smart textile enabled to control changes in its temperature appropriately.

Furthermore, the textile 100 according to the embodiment is characterized in being used in a lamp shade, wallpaper, or furniture.

With this, it is possible to provide a smart textile capable of serving as a part of lamp shade, wallpaper, or furniture.

### [5. Others]

Furthermore, among the processes explained in the embodiment, the whole or a part of the processes explained to be performed automatically may be performed manually, or the whole or a part of the processes explained to be performed manually may be performed automatically using any known method. In addition, the processing sequence, specific names, or information including various types of data or parameters mentioned in the above description or the drawings may be changed in any way, unless specified otherwise. For example, various types of information indicated in the drawings are not limited to those illustrated.

Furthermore, the elements of the devices illustrated in the drawings are merely functional and conceptual representations, and do not necessarily need to be physically configured as illustrated in the drawings. In other words, specific configurations in which each of the devices is distributed or integrated are not limited to those illustrated in the drawings, and the whole or a part thereof may be distributed to or integrated into any functional or physical units, depending on various loads or utilization.

The embodiments described above may be combined as appropriate, within the scope that the processing does not become inconsistent.

Some embodiments of the present application have been explained in detail with reference to the drawings. However, these embodiments are provided for the illustrative purpose only, and it is possible to implement the present invention in other embodiments with various modifications and improvements added thereto, based on the knowledge of those skilled in art.

### Reference Signs List

- 1: information processing system
- 10: controller
- 100: textile
- N: network

## Claims

1. A smart textile including a foil having a layered structure in which a layer of thermochromic ink changing color at a predetermined temperature as a threshold and a layer of a heating electrode are layered.

2. The smart textile according to claim 1, wherein the foil includes a color-changing layer that changes color based on the thermochromic ink, and a heater layer that generates heat based on the heating electrode, with the color-changing layer and the heater layer being integrated with each other, and a plurality of the foils are laid in parallel.

3. The smart textile according to claim 2, wherein two points on respective ends of the foil are short-circuited via a conductive material disposed perpendicular to a direction connecting the two points of the respective ends.

4. The smart textile according to claim 2 or 3, wherein the color-changing layer and the heater layer are integrated with a control circuit, and a change in the color of the color-changing layer is controlled selectively along a longitudinal direction of the foil.

5. A smart textile including a yarn including concentric layers of thermochromic ink and of a heating electrode, the thermochromic ink changing color at a predetermined temperature as a threshold.

6. The smart textile according to claim 5, wherein the yarn includes a color-changing layer that changes color based on the thermochromic ink, and a heater layer that generates heat based on the heating electrode, with the color-changing layer and the heater layer being integrated with each other, and a plurality of the yarns are laid in parallel.

7. The smart textile according to claim 6, wherein the color-changing layer and the heater layer are integrated with a control circuit, and a change in the color of the color-changing layer is controlled selectively along a longitudinal direction of the yarn.

8. The smart textile according to any one of claims 1 to 7, wherein a heating material of the heater layer is a PTC ink, a carbon material, or an enameled wire.

9. The smart textile according to any one of claims 1 to 8, wherein a material of the heater layer is a Peltier element.

10. The smart textile according to any one of claims 1 to 9, wherein the thermochromic ink changes the color in a plurality of stages in response to a temperature.

11. The smart textile according to claim 10, wherein the thermochromic ink changes the color based on a combination of a base color that turns colorless by being heated, and another base color that does not turn colorless by being heated.

12. The smart textile according to claim 10 or 11, wherein a change in the temperature is controlled by feedback control.

13. The smart textile according to any one of claims 1 to 11 used in a lamp shade, wallpaper, or furniture.

14. A system including:
a smart textile that includes a foil having a layered structure in which a layer of thermochromic ink changing color at a predetermined temperature as a threshold and a layer of a heating electrode are layered; and
a controller that controls heating of the heating electrode.
